# EUROPEAN PATENT SPECIFICATION

(11) **EP 1 342 630 B1**
(45) Date of publication and mention of the grant of the patent: **24.08.2005**
(21) Application number: 03001278.5
(22) Date of filing: 22.01.2003
(51) Int. Cl.: B60R 21/22, B60R 21/16

(54) **Airbag device**
Luftsackvorrichtung
Dispositif de coussin gonflable

(30) Priority: 07.03.2002 JP 2002062272
(43) Date of publication of application: 10.09.2003
(73) Proprietor: TAKATA CORPORATION, Tokyo 106-8510 (JP)
(72) Inventor: Igawa, Tadahiro, Minato-ku, Tokyo 106-8510 (JP)
(74) Representative: Banzer, Hans-Jörg

(56) References cited:
- WO-A-01/34436
- US-A1- 2001 033 072
- US-A1- 2001 035 639

## Description

### [Technical Field of the Invention]

The present invention relates to an airbag device for unfolding an airbag to protect an occupant in case of an emergency such as a vehicle collision, and more specifically to an airbag device for varying an occupant protecting area of an airbag during the process of unfolding the airbag.

### [Description of the Related Art]

Generally, an airbag device for vehicle comprises an airbag and an inflator for expanding the airbag and is constructed such that in case of an emergency such as a vehicle collision, the inflator ejects and supplies gas to the airbag for unfolding the airbag in the vehicle.

Such a device is described in International Publication WO 01/34434 as well as US Patent Application Publication US2001/0035639 A1, where in order to decrease the length of the airbag protruded toward an occupant in expanding the airbag, the front side (occupant side) and the rear side of the airbag are connected by a strap or straps.

When the airbag is expanded by gas ejected from the inflator, the strap or straps become tight and thus, the length by which the front side of airbag is protruded toward the occupant is limited.

### [Problems to be solved by the Invention]

An object of the present invention is to provide an airbag device in which the forwardly-protruded length of an expanded airbag is limited by a strap and in which when a lower portion of the expanded airbag receives an abdominal vicinity of an occupant, an upper portion of the airbag is more expanded toward the occupant to receive the head portion of the occupant.

### [Means for Solving the Problems]

According to the present invention, this object is achieved by an airbag device as defined in claim 1. The dependent claim defines an advantageous and preferred embodiment of the present invention.

An airbag device of the present invention comprises: an airbag having a front surface facing an occupant and a rear surface opposite to the front surface; and an inflator for expanding the airbag, wherein strap inserting members are provided in an upper portion and a lower portion of the front surface of the airbag, respectively, and wherein a strap disposed within the airbag is provided such that both ends thereof are coupled on the rear surface side of the airbag and an intermediate portion thereof passes through each of the strap inserting members.

The airbag device of the present invention is provided in a vehicle as an airbag device for protecting an occupant. In this airbag device, the airbag is expanded by gas from the inflator in case of an emergency such as a vehicle collision.

Since the front surface side and the rear surface side of the airbag are connected by a strap, the expansion of the airbag toward the front of the front surface is restricted.

When an occupant comes in contact with the airbag and then, the abdominal vicinity of the occupant comes in contact with the lower portion of the front surface of the airbag, the lower portion of the front surface of airbag retreats toward the rear surface of the airbag while absorbing the kinetic energy of the occupant.

Like the above, when the lower portion of the front surface side of the airbag retreats, the lower half of the strap which has restricted the forward expansion of the lower portion of the front surface side of the airbag becomes loose as the front surface of the airbag retreats. Then, the lower half of the strap is shifted by the loose portion from the strap inserting members to the upper half by means of tension from the upper half of the strap which has restricted the forward expansion of the upper portion of the front surface of airbag, and thus, the length of the upper half of the strap is increased. As a result, the restriction by the upper half of the strap is relieved, and thus the upper portion of the front surface of the airbag is more expanded forward.

As a result, the more expanded upper portion of the airbag receives the head portion of the occupant coming in contact with the upper portion of the airbag, and thus impact inflicted on the head portion can be more effectively absorbed.

In the airbag device of the present invention, the strap inserting members may be provided in a left portion and a right portion of the front surface of the airbag, respectively, and the strap disposed within the airbag may be provided such that both ends thereof are coupled to the rear surface side of the airbag and an intermediate portion thereof passes through each of the left strap inserting member and the right strap inserting member.

In such airbag device, when the left half of an occupant comes in contact with the left portion of the expanded airbag before the right portion, the left portion of the airbag retreats. At that time, the left-right strap is shifted through the strap inserting members toward the right half by means of tension of the right half thereof, and thus the length of the right half of the left-right strap is increased. Consequently, to compensate the retreat of the left portion of airbag, the right portion of airbag is more expanded forward. For this reason, impact inflicted on the right half of the occupant coming in contact with the right portion of airbag can be effectively absorbed.

### [Brief Description of the Drawings]

FIG. 1 is a vertical sectional view of an airbag device according to an embodiment of the present invention.
FIG. 2 is an exploded perspective view of an airbag of FIG. 1.
FIG. 3 is an explanatory view illustrating an arrangement of a strap of FIG. 1.
FIG. 4 is an explanatory view illustrating the operation of the airbag device of FIG. 1.
FIG. 5 is an exploded perspective view illustrating strap inserting members according to a preferred embodiment of the present invention.
FIG. 6 is an exploded perspective view illustrating a strap connecting structure according to a preferred embodiment of the present invention.
FIG. 7 is an explanatory view illustrating an arrangement of a strap according to a preferred embodiment of the present invention.
FIG. 8 is an explanatory view illustrating an arrangement of a strap according to a preferred embodiment of the present invention.
FIG. 9 is an explanatory view illustrating an arrangement of a strap according to a preferred embodiment of the present invention.
FIG. 10 is an explanatory view illustrating an arrangement of the strap according to the embodiment of the present invention.
FIG. 11 is an explanatory view illustrating an arrangement of a strap according to a preferred embodiment of the present invention.
FIG. 12 is an explanatory view illustrating the operation of an airbag device for a passenger seat according to a preferred embodiment of the present invention.

### [Description of Embodiments]

Now, preferred embodiments of the present invention will be explained in detail with reference to the drawings.

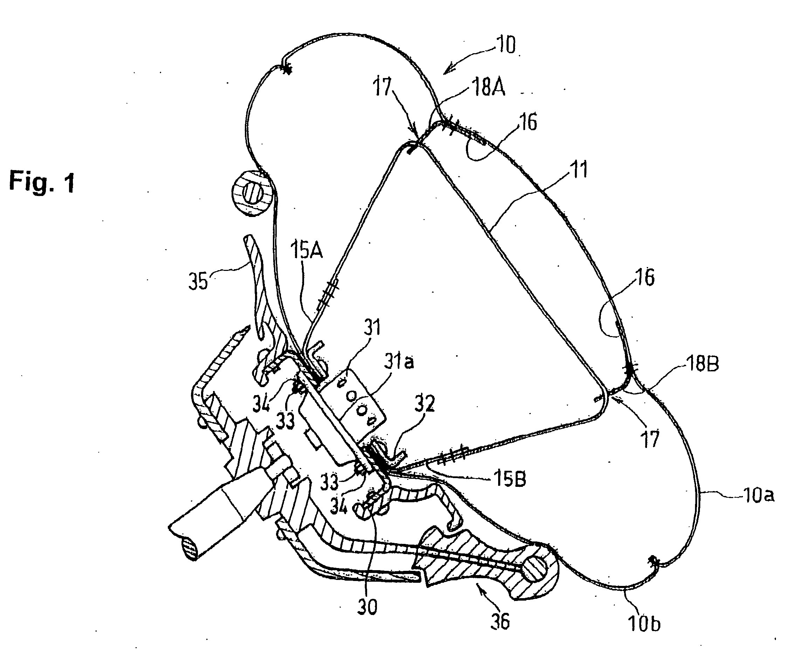

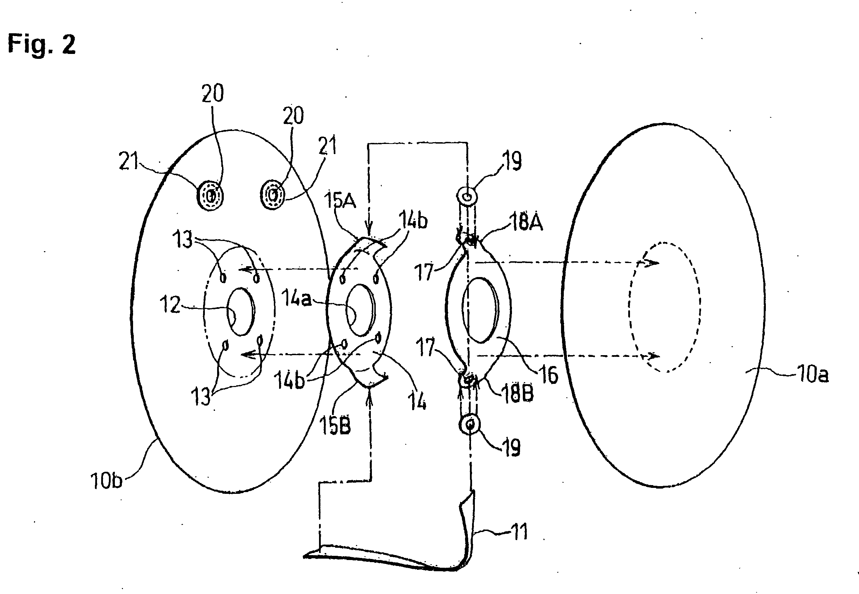

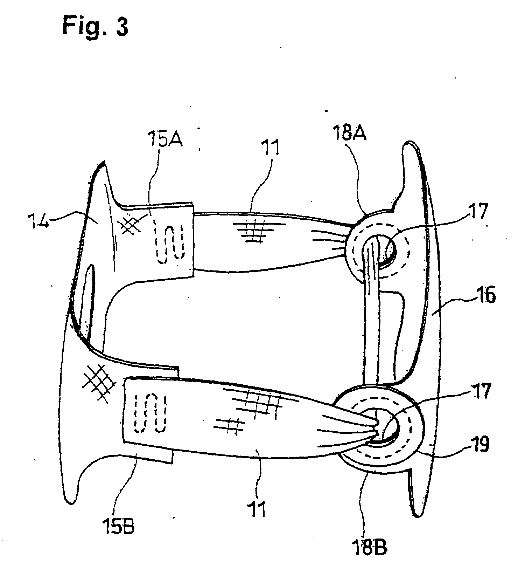

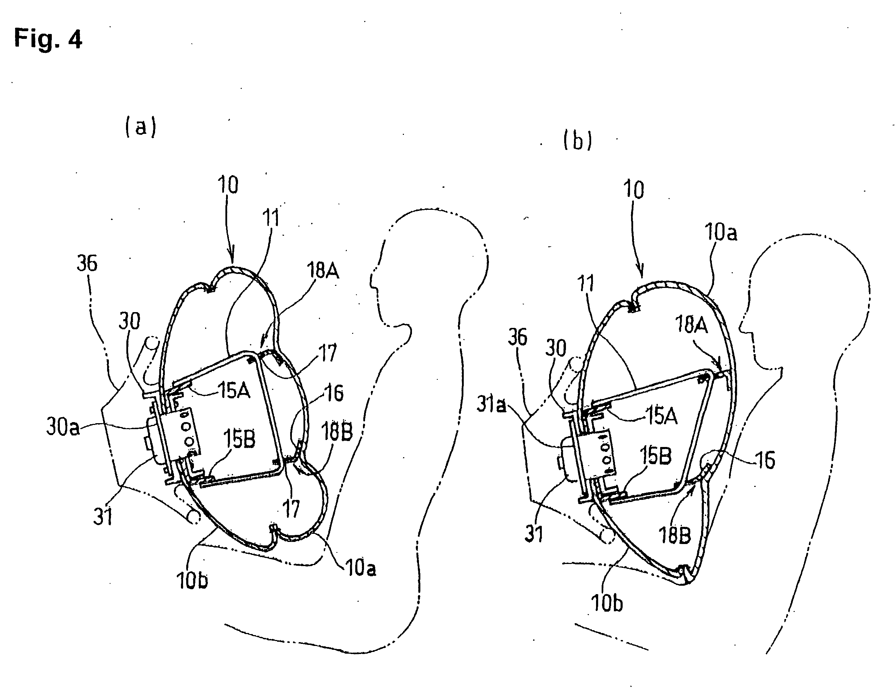

FIG. 1 is a vertical sectional view of an airbag device according to an embodiment of the present invention when an airbag is expanded; FIG. 2 is an exploded perspective view of the airbag; FIG. 3 is an explanatory view illustrating an arrangement of a strap; and FIG. 4 is an explanatory view illustrating an operation state of the airbag device. Further, an upward-and-downward direction in the following description means the upward-and-downward direction when a steering wheel of a vehicle equipped with the airbag device is maintained in a neutral steering state (a state that the wheel is not turned) for steering the vehicle straight ahead.

The airbag device includes an airbag 10 for a driver seat. The airbag 10 is constructed to be expanded by sewing circumferential edge portions of a front panel 10a and a rear panel 10b made of a circular fabric and the like, respectively, and introducing gas between both panels. In the airbag 10, a strap 11 is provided for connecting the front panel 10a and the rear panel 10b.

The airbag 10 is constructed such that when it is installed in a vehicle, the front panel 10a faces an occupant and the rear panel 10b is connected to a retainer 30 on the opposite side. An opening 12 for engaging an inflator 31 is provided in the vicinity of a center of the rear panel 10b. The airbag 10 is expanded by introducing gas from the inflator 31 through the opening 12. A circumferential edge portion of the opening 12 in the rear panel 10b is provided with inserting holes 13 for inserting bolts for fixing the airbag 10 to the retainer 30. The inserting holes 13 are arranged at equal intervals around the opening 12.

The circumferential edge portion of the opening 12 in the rear panel 10b is provided with a reinforcing cloth 14 along an inner surface of the rear panel 10b. The reinforcing cloth 14 has an annular shape with an opening 14a having a diameter almost equal to that of the opening 12, the opening 14a is arranged almost coaxially with the opening 12, and the reinforcing cloth 14 is fixed to the rear panel 10b by sewing. Further, a circumferential edge portion of the opening 14a in the reinforcing cloth 14 is provided with inserting holes 14b having diameters almost equal to those of the inserting holes 13 at positions overlapping the inserting holes 13.

An upper edge and a lower edge of the reinforcing cloth 14 are provided, as shown in FIG. 2, with ear portions 15A and 15B for connecting both ends of the strap 11, respectively. The ear portions 15A and 15B are arranged in the vicinity of centers in the left-and-right direction of the upper and lower portions of the rear panel 10b.

A reinforcing cloth 16 is provided in the vicinity of a center of the front panel 10a along an inner surface thereof. As shown in FIG. 2, the reinforcing cloth 16 has an annular shape in which an upper edge and a lower edge thereof is overlapped with the upper portion and the lower portion of the front panel 10a, respectively. Further, the reinforcing cloth 16 is arranged almost concentrically with the front panel 10a and is fixed to the front panel 10a by sewing and the like.

The upper edge and the lower edge of the reinforcing cloth 16 are provided with strap inserting members 18A and 18B having an opening 17, respectively, for allowing the strap 11 to pass therethrough. The strap inserting members 18A and 18B are arranged in the vicinity of a center in the left-and-right direction of the upper portion and the lower portion of the front panel 10a, respectively. Annular reinforcing cloths 19 for reinforcing the openings 17 are fixed to circumferential edge portions of the openings 17 of the respective strap inserting members 18A and 18B, respectively, by sewing and the like.

As shown in FIG. 3, both ends of the strap 11 are coupled to the respective ear portions 15A and 15B of the reinforcing cloth 15 of the rear panel 10b, respectively, by sewing and the like, and an intermediate portion thereof passes through the openings 17 of the strap inserting members 18A and 18B arranged, respectively, in the upper portion and the lower portion of the front panel 10a. The intermediate portion of the strap 11 is movable in the longitudinal direction thereof through the respective openings 17.

The upper portion and the lower portion of the front panel 10a are connected to the rear panel 10b, respectively, by the strap 11 arranged like above.

The left side and the right side of the upper portion of the rear panel 10b are provided, as shown in FIG. 2, with vent holes 20 to avoid the strap 11 passing through the vicinity of the center in the left-and-right direction in the airbag 10. In this embodiment, the vent holes 20 are circular openings. An annular reinforcing cloth 21 is attached to a circumferential edge portion of each vent hole 20 by sewing and the like, concentrically with the vent hole 20. Further, FIG. 2 shows an example, but not limited to, of an arrangement of the vent holes, and a shape or number of the vent holes, an arranging position and a reinforcing structure of the circumferential edge portion thereof.

The airbag 10, as shown in FIG. 1, is connected to a front surface (a surface facing an occupant) of the retainer 30 by means of a holding ring 32. Stud bolts 33 are projected from a rear surface of the holding ring 32 at the same intervals as the inserting holes 13 of the rear panel 10b.

The inflator 31 is fitted into the retainer 30. A flange 31a is projected laterally from the inflator 31, and the flange 31a is overlapped with the rear surface of the retainer 30.

In the airbag 10, the circumferential edge portion of the opening 12 of the rear panel 10b is overlapped with the front surface of the retainer 30 such that the inflator engages the opening 12. The holding ring 32 is overlapped with the circumferential edge portion of the opening 12 concentrically with the opening 12. The stud bolts 33 are inserted into the inserting holes 13 and pass through the retainer 30 and the flange 31a. Further, by fastening the front ends of the stud bolts 33 with nuts 34, the holding ring 32 is fixed to the retainer 30 and the circumferential edge portion of the opening 12 is sandwiched between the holding ring 32 and the retainer 30. Further, the flange 31a of the inflator 31 is also fixed to the retainer 30 along with the holding ring 32 by means of the stud bolts 33 and the nuts 34.

The airbag device is constructed such that the airbag 10 is folded and covered with a cover 35 (see FIG. 1). The airbag device is installed in a steering wheel 36 of a vehicle.

Now, operation state of the airbag device will be explained with respect to FIG. 4. Further, FIG. 4(a) is a sectional view of the airbag device when the expansion of the airbag has been completed, and FIG. 4(b) is a sectional view of the airbag when the airbag makes contact with an occupant.

In the airbag device installed in the steering wheel 36 of the vehicle in case of an emergency such as a vehicle collision, the inflator 31 ejects and supplies gas to the inside of the airbag 10, thereby expanding the airbag 10. The airbag 10 pushes and opens the cover 35 by means of the gas pressure for unfolding itself inside the vehicle.

At that time, since the upper portion and the lower portion of the front panel 10a are connected to the rear panel 10b by means of the strap 11, the airbag 10 is constructed such that the forward expansion thereof is restricted and the inner volume thereof is small. For this reason, even when the inflator 31 is low-powered, the airbag 10 rapidly completes the unfolding process to reach a state that it can receive the occupant (see FIG. 4(a)).

Like this, when the occupant comes in contact with the unfolded airbag 10, the lower portion of body such as abdomen first comes in contact with the facing lower portion of the front panel 10a. Then, the lower portion of the front panel 10a receives the lower portion of the occupant and retreats toward the rear panel 10b while absorbing the kinetic energy of the occupant.

At that time, the lower half of the strap 11 which has been drawn through the strap inserting member 18B from the ear portion 15B to restrict the forward expansion of the lower portion of the front panel 10a becomes loose as the lower portion of the front panel 10a is retreated. Then, the lower half of the strap 11 is shifted by the loose portion toward the upper half through the strap inserting members 18B, 18A by means of tension from the upper half of the strap 11 which has been drawn through the strap inserting member 18A from the ear portion 15A to restrict the forward expansion of the upper portion of the front panel 10a, thereby increasing the length of the upper half of the strap 11. For this reason, the restriction on the upper portion of the front panel 10a by means of the upper half of the strap 11 is relieved, and thus as shown in FIG. 4(b) the upper portion of the front panel 10a is more expanded forwardly.

By doing so, since the more expanded upper portion of the airbag 10 receives the head portion of the occupant coming in contact with the upper portion of the airbag 10, it is possible to effectively absorb the impact inflicted on the head portion of the occupant.

In the above embodiment, although the strap inserting members 18A and 18B have been constructed in an ear shape to be projected from the upper edge and the lower edge of the reinforcing cloth 16 fixedly attached to the inner surface of the front panel 10a integrally with the reinforcing cloth 16, the strap inserting members is not limited to such construction. For example, both strap inserting members may be provided separate from the reinforcing fabric.

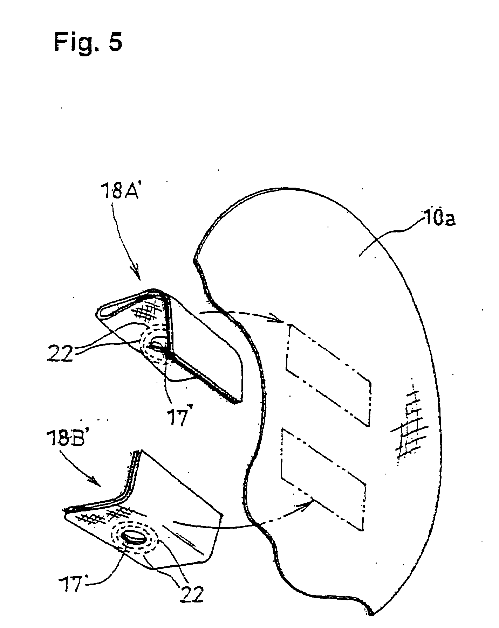

Further, each strap inserting member may be separately provided in the upper portion and the lower portion of the front panel 10a. FIG. 5 is an exploded perspective view of main parts illustrating the construction that each strap inserting member is provided separately like above.

In an embodiment shown in FIG. 5, an upper strap inserting member 18A' and a lower strap inserting member 18B' are constructed separately and each thereof is arranged in the upper portion and the lower portion of the front panel 10a.

Each of the strap inserting member 18A' and 18B' is fabricated from a belt-like basic cloth. The basic cloth is fold back from the center in the longitudinal direction thereof and thus is constructed in a 2 sheets-overlapped shape. An opening 17' perforating the basic cloth of 2 sheets-overlapped shape is provided on the front end side of each of the strap inserting member 18A' and 18B'. A strap (not shown) is drawn through the opening 17'. The overlapped basic cloths are sewn along the circumferential edge portion of the opening 17', and as a result, the circumferential edge portion of the opening 17' is reinforced. A reference numeral 22 of FIG. 5 indicates the sewn line. The base sides of the respective strap inserting member 18A' and 18B' are coupled to the inner surface of the front panel 10a by sewing and the like, respectively.

Each strap inserting member may have various shapes other than the aforementioned shape. For example, a ring or a loop-shaped member made of cloth, metal, synthetic resin and the like may be attached to the front panel 10a through the basic cloth such as the reinforcing cloth 16 or directly to the front panel 10a and then the strap may be drawn through it.

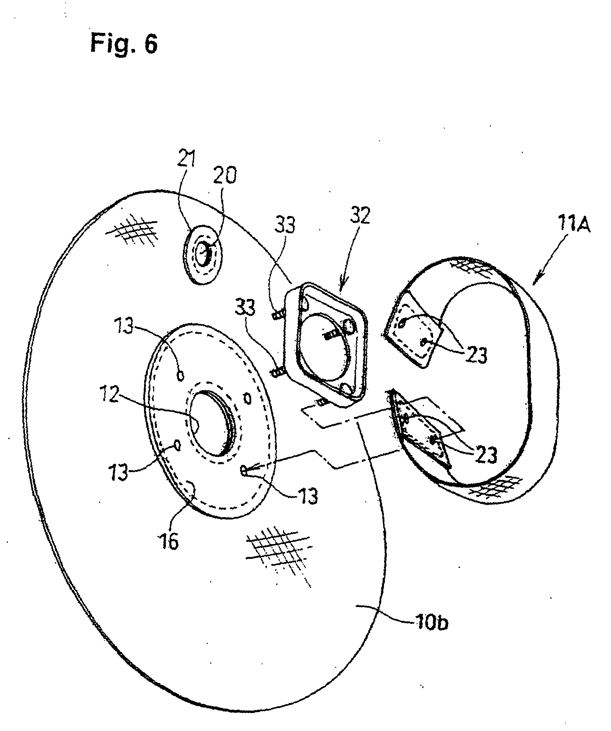

Further, the structure for connecting both ends of the strap 11 to the rear panel 10b may include various structures other than that shown in FIGs. 1 to 4. For example, both ends of the strap 11 may be placed between the rear panel 10b and the reinforcing cloth 14 and may be sewn on the rear panel 10b along with the circumferential edge portion of the reinforcing cloth 14. Or, both ends of the strap 11 may be not coupled to the rear panel 10b but may be sandwiched between the holding ring 23 and the retainer 30 along with the circumferential edge portion of the opening 12 of the rear panel 10b for engaging the inflator. FIG. 6 is an exploded perspective view illustrating such connection structure of the strap.

In the embodiment of FIG. 6, a total of 4 bolt inserting holes 13 are provided around the opening 12 of the rear panel 10b for engaging the inflator, passing through the reinforcing cloth 14. Each of the inserting holes 13 is arranged at an equal intervals at positions phase-deviated by about 45° from the left-and-right segment and the upward-and-downward segment passing through a center of the opening 12. A total of 4 stud bolts 33 are projected from the rear surface of the holding ring 32, at the same interval as the inserting holes 13.

An upper end portion of a strap 11A has two inserting holes 23 overlapping the respective inserting holes 13 arranged in the upper-right side and the upper-left side of the opening 12, and a lower end portion of a strap 11A has two inserting holes 23 overlapping the respective inserting holes 13 arranged in the lower-right side and the lower-left side of the opening 12. The inserting holes 23 are disposed such that the adjacent inserting holes runs along the upper end edge and the rear end edge of the strap 11A, respectively.

Further, the strap 11A is fabricated from a belt-like basic cloth longer than a necessary length and both ends thereof are fold back to be in a 2 sheets-overlapped shape, so that the intensity of both ends thereof can be increased. The respective inserting holes 23 pass through the 2 sheets-overlapped shaped basic cloths.

An intermediate portion of the strap 11A passes through the respective strap inserting holes 18A and 18B (or 18A' and 18B', not shown) arranged in the upper portion and the lower portion of the front panel 10a (not shown), however both ends thereof are not coupled to the rear panel 10b.

In the connection structure of the strap 11A, the circumferential edge portion of the opening 12 of the rear panel 10b is overlapped with the front surface of the retainer 30 (not shown), the upper end portion and the lower end portion of the strap 11A are overlapped with the upper edge side and the lower edge side of the opening 12, respectively, and the holding ring 32 is further overlapped thereon. At that time, the corresponding inserting holes 13, 23 are overlapped with each other having inserted with the stud bolts 33. The front ends of the stud bolts 33 pass through the retainer 30. Then, the front ends of the stud bolts 33 are fastened with the nuts 34 (not shown) and the holding ring 32 is fixed to the retainer 30. By doing so, the circumferential edge portion of the opening 12 and the both ends of the strap 11A are sandwiched between the holding ring 32 and the retainer 30.

In this embodiment, one vent hole 20 is provided substantially right above the opening 12. To a circumferential edge portion of the vent hole 20, an annular reinforcing cloth 21 is attached concentrically with the vent hole.

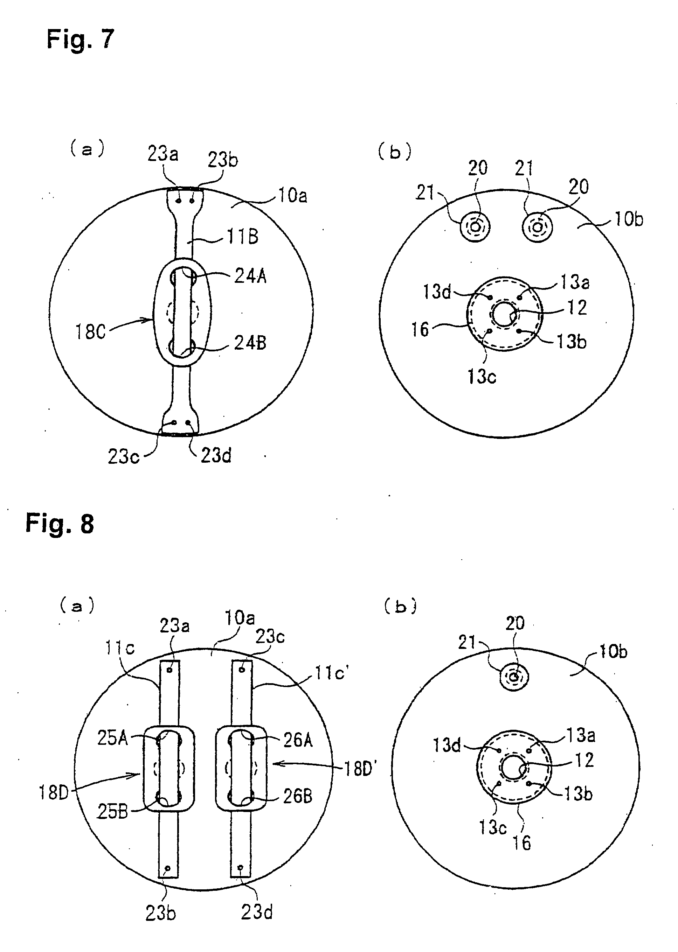

In the respective embodiments described above, the airbag device is configured such that the upper portion and the lower portion of the front panel of the airbag are connected to the rear panel of the airbag only by one strap to control the forward expansion of the upper portion and the lower portion of the front panel when the airbag is expanded. However, in the airbag device of the present invention, the number or the arrangement of the strap may be changed according to its use or application conditions. FIGs. 7 to 10 illustrate various embodiments of examples having a different number or a different arrangement of the strap. Further, (a)s of FIGs. 7 to 10 are plan views of the inner sides of the front panels unfolded flat, and (b)s thereof are plan views of the inner sides of the rear panels constituting a set along with the front panels of (a)s.

In an embodiment of FIG. 7, one strap 11B extending in the upward-and-downward direction in the vicinity of a center in the left-and-right direction of the front panel 10a is provided. A strap inserting member 18C is provided in the vicinity of a center of the front panel 10a.

The strap inserting member 18C is fabricated from a basic cloth having a rectangular shape elongated in the upward-and-downward direction, and the upper end side and the lower end side thereof are provided with openings 24A, 24B for allowing the strap 11B to pass therethrough. The openings 24A, 24B of the strap inserting member 18C are arranged in the upper portion and the lower portion of the front panel 10a, respectively, and a center vicinity in the longitudinal direction thereof is coupled to the front panel 10a by sewing and the like.

In an embodiment of FIG. 8, two straps 11C and 11C' extending in parallel in the upward-and-downward direction, sandwiching a center vicinity in the left-and-right direction of the front panel 10a and having positions different in the left-and-right direction from each other, are provided.

Two strap inserting members 18D and 18D' sandwiching a center vicinity in the left-and-right direction of the front panel 10a and having positions different in the left-and-right direction from each other, are provided in the vicinity of a center of the front panel 10a.

The strap inserting members 18D and 18D' have a structure similar to the strap inserting member 18C of FIG. 7, respectively and are constructed such that two strap inserting members 18C are arranged in parallel in the horizontal direction. The strap inserting members 18D and 18D' have openings 25A and 26A and 25B and 26B for allowing the straps 11C and 11C' to pass therethrough on the upper end side and the lower end side thereof, respectively. The openings 25A and 26A on the upper end side are arranged in the upper portion of the front panel 10a and the openings 25B and 26B on the lower end side are arranged in the lower portion of the front panel 10a, respectively. Further, central portions in the upward-and downward direction of the respective strap inserting members 18D and 18D' are coupled to the inner surface of the front panel 10a by sewing and the like.

Further, the strap 11C is drawn through the openings 25A and 25B of the strap inserting member 18D, and the strap 11C' is drawn through the openings 26A and 26B of the strap inserting member 18D'.

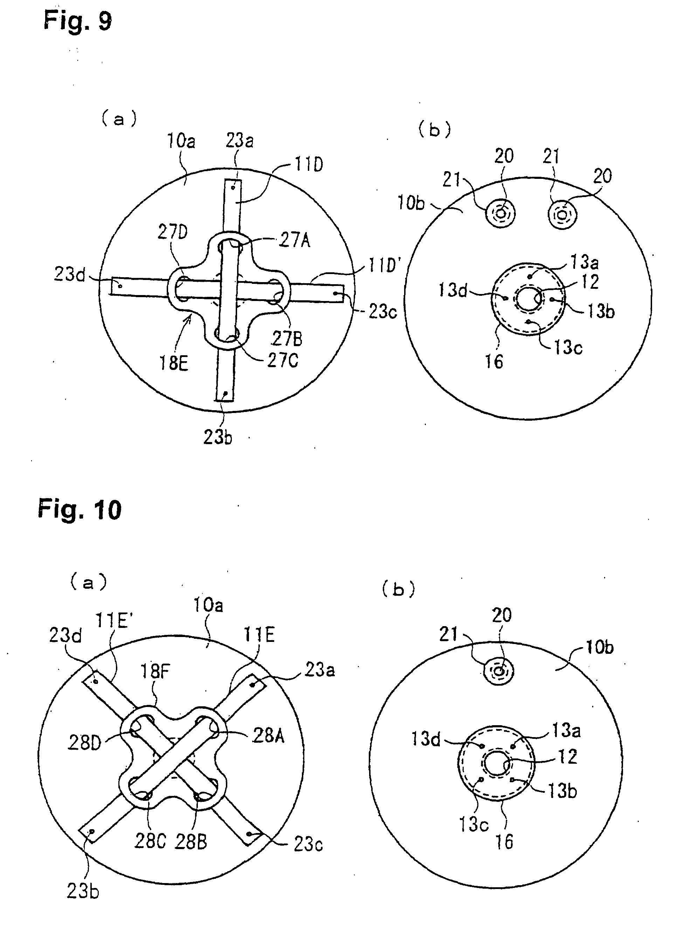

In another embodiment of FIG. 9, straps 11D and 11D' are provided in the upward-and-downward direction and the left-and-right direction in the front panel 10a, respectively. The straps 11D and 11D' cross each other in the vicinity of a center of the front panel 10a. The center of the front panel 10a is provided with a strap inserting member 18E for both straps 11D and 11D'.

The strap inserting member 18E is fabricated from a basic cloth having a square shape and openings 27A, 27B, 27C and 27D are provided in the vicinity of each vertex thereof. The vertexes of the strap inserting member 18E are arranged to be directed toward the upward-and-downward direction and the left-and-right direction, respectively, the openings 27A and 27C are arranged in the upper portion and the lower portion of the front panel 10a, respectively, and the openings 27B and 27D are arranged in the left portion and the right portion of the front panel 10a, respectively. Further, a central portion of the strap inserting member 18E is coupled to the inner surface of the front panel 10a by sewing and the like.

The strap 11D is drawn through the upper and lower openings 27A and 27C of the strap inserting member 18E, and the strap 11D' is drawn through the left and right openings 27B and 27D.

A further embodiment of FIG. 10 has a construction obtained by rotating the front panel 10a of FIG. 9 clockwise by about 45°.

That is, in the embodiment of FIG. 10, two straps 11E and 11E' are provided, extending in a substantially X shape from the upper-left side to the lower-right side and from the lower-left side to the upper-right side of the front panel 10a. The straps 11E and 11E' cross each other in the vicinity of the center of the front panel 10a. A central portion of the front panel 10a is provided with a strap inserting member 18F having a square shape of which four vertexes are directed toward the upper-left side, the lower-left side, the lower-right side and the upper-right side, respectively. Openings 28A, 28B, 28C and 28D are provided in the vicinity of each vertex of the strap inserting member 18F.

The openings 28A, 28B, 28C and 28D are arranged in the upper-left portion, the lower-left portion, the lower-right portion and the upper-right portion of the front panel 10a, respectively. The strap 11E is drawn through the openings 28A and 28C and the strap 11E' is drawn through the openings 28B and 28D.

Further, in the respective embodiments of FIGs. 7 to 10, vent holes are provided in the rear panel 10b such that they avoid the extended areas of the respective straps 11B, 11C, 11C', 11D, 11D', 11E and 11E', respectively. A reinforcing cloth 21 is provided in the respective vent holes 20 for reinforcing the circumferential edge portions thereof, respectively.

The connection structure of the strap in each embodiment of FIG. 7 to FIG. 10 is constructed such that the circumferential edge portions of opening 12 of the rear panel 10b and both ends of each strap 11B to 11E' are sandwiched between the holding ring 32 (not shown) and the retainer 30 (not shown), similarly to the connection structure of the strap of FIG. 6. That is, both ends of each strap 11B to 11E' of FIGs. 7 to 10 are provide with bolt inserting holes 23 (23a to 23d) overlapping the respective bolt inserting holes 13 (13a to 13d) arranged around the opening 12.

Specifically, in the embodiment of FIG. 7, the inserting holes 13a, 13b, 13c and 13d are provided in the rear panel 10b every 90° at positions phase-deviated by 45° from segments passing through a center of the opening 12 and extending in the upward-and-downward direction and the left-and-right direction. The upper end portion and the lower end portion of the strap 11B are provided with two inserting holes 23a and 23b overlapping the respective inserting holes 13a and 13d arranged on the upper-left side and the upper-right side of the opening 12 and two inserting holes 23c, 23d overlapping the respective inserting holes 13b and 13c arranged on the lower-left side and the lower-right side of the opening 12.

In the embodiment of FIG. 8, similar to the embodiment of FIG. 7, the openings 13a, 13b, 13c and 13d are provided on the upper-left side, the lower-left side, the lower-right side and the upper-right side of the opening 12 of the rear panel 10b, respectively. Both ends of the strap 11C are provided with the inserting hole 23a overlapping the upper-left inserting hole 13a of the opening 12 and the inserting hole 23b overlapping the lower-left inserting hole 13b of the opening 12, respectively. Further, both ends of the strap 11C' are provided with the inserting hole 23c overlapping the upper-right inserting hole 13d of the opening 12 and the inserting hole 23d overlapping the lower-right inserting hole 13c of the opening 12, respectively.

In the embodiment of FIG. 9, the inserting holes 13a, 13b, 13c and 13d are provided in the upper, lower, left, and right sides of the opening 12 of the rear panel 10b every 90°. Both ends of the strap 11D are provided with the inserting hole 23a overlapping the upper inserting hole 13a of the opening 12 and the inserting hole 23b overlapping the lower inserting hole 13c of the opening 12, respectively. Further, both ends of the strap 11D' are provided with the inserting hole 23d overlapping the left inserting hole 13b of the opening 12 and the inserting hole 23c overlapping the right inserting hole 13d of the opening 12, respectively.

In the embodiment of FIG. 10, similar to the embodiments of FIGs. 7 and 8, the openings 13a, 13b, 13c and 13d are provided on the upper-left side, the lower-left side, the lower-right side and the upper-right side of the opening 12 of the rear panel 10b, respectively. Both ends of the strap 11E' are provided with the inserting hole 23d overlapping the upper-left inserting hole 13a of the opening 12 and the inserting hole 23c overlapping the lower-right inserting hole 13c of the opening 12, respectively. Further, both ends of the strap 11E are provided with the inserting hole 23a overlapping the upper-right inserting hole 13d of the opening 12 and the inserting hole 23b overlapping the lower-left inserting hole 13b of the opening 12, respectively.

In each strap 11B to 11E' of FIGs. 7 to 10, both ends thereof are overlapped with the circumferential edge portion of the opening 12 of the rear panel 10b such that the inserting holes 23a to 23d overlap the corresponding inserting holes 13a to 13d, are sandwiched between the holding ring 32 and the retainer 30 along with the circumferential edge portion thereof, and the stud bolts 33 are inserted into the respective inserting holes 23a to 23d and 13a to 13d corresponding to each other.

The airbag is constructed by overlapping the front panel 10a and the rear panel 10b of FIGs. 7 to 10 and coupling the circumferential edge portions thereof, the airbag device is constructed by connecting the rear panel 10b along with the inflator 31 to the retainer 30 by using the holding ring 32 and folding and covering the airbag with the cover 35 (not shown), and then the airbag device is provided in the steering wheel 36 (not shown).

The airbag having the construction of FIG. 7 is basically constructed similar to the airbags 10 of FIGs. 1 to 4 and has effects similar to effects thereof.

In the airbag device including the airbag having the construction of FIG. 8, since the forward expansion of the front panel 10a is restricted by the straps 11C and 11C' when the airbag is expanded, even when the inner volume of the airbag is small and the inflator 31 is low-powered, the unfolding of the airbag can be completed very rapidly.

Then, on the left half side and the right half side of the unfolded airbag, since the upper portion and the lower portion thereof are connected by the straps 11C and 11C', in addition to effects similar to those of the airbag 10 of FIGs. 1 to 4, even when the occupant comes in collision with partially with the left half side or the right half side of the airbag, the upper portion is expanded forwardly along with the movement of the strap 11C or 11C', and the impact inflicted on the head portion can be effectively adsorbed only by the left half side or the right half side when the upper portion receives the head portion of the occupant coming in contact with the upper portion.

In the airbag having the construction of FIG. 9, the upper portion and the lower portion of the front panel 10a are connected to the rear panel 10b by means of the strap 11D, and the right portion and the left portion of the front panel 10a are connected to the rear panel 10b by means of the strap 11D'. In the airbag device having this airbag, since the forward expansion of the front panel 10a is restricted by the straps 11D and 11D' when the airbag is expanded, even when the inner volume of the airbag is small and the inflator 31 is low-powered, the unfolding of the airbag can be completed very rapidly.

In a case that the steering wheel 36 is in the neutral steering state when the airbag is unfolded, the lower portion and the upper portion of the front panel 10a are arranged on the upper side and the lower side of the airbag, respectively. If the abdominal vicinity of the occupant comes in contact with the lower side of the airbag, the lower portion of the front panel 10a retreats and the upper portion of the front panel 10a is more expanded forwardly along with the movement of the strap 11D, so that it is possible to effectively absorb the impact inflicted on the head portion when the airbag receives the head portion coming in contact with the upper portion thereof.

In a case that the steering wheel 36 is turned by 90° toward the right side (or, the left side) when the airbag is expanded, the right portion (or, the left portion) of the front panel 10a is shifted to the lower side of the airbag. In this state, if the abdominal vicinity of the occupant comes in contact with the lower side of the airbag, the right portion of the front panel 10a retreats and the left portion of the front panel 10a is more expanded forwardly along with the movement of the strap 11D' such that the airbag receives the head portion of the occupant coming in contact with the upper portion thereof to effectively absorb the impact inflicted on the head portion.

Further, in a case that the steering wheel 36 is turned by an angle (for example, 45°) less than 90° toward the right side when the airbag is expanded, first ends of both of the straps 11D and 11D' are disposed on the lower side of the airbag and the other ends thereof are disposed on the upper side of the airbag. In this state, if the abdominal vicinity of the occupant comes in contact with the lower side of the airbag, the lower portion of the front panel 10a retreats and thus the first ends of the straps 11D and 11D' become loose. Then, the lengths of the other end of the straps 11D and 11D' are increased by the loose portion and then, the upper portion of the front panel 10a is more expanded forwardly such that the airbag receives the head portion of the occupant coming in contact with the upper portion thereof to effectively absorb the impact inflicted on the head portion.

Like the above, in the airbag device including the airbag having the construction of FIG. 9, irrespective of the turning angle of the steering wheel 36, it is always possible to effectively absorb the impact inflicted on the head portion of the occupant.

The airbag having the construction of FIG. 10 is constructed by rotating the airbag of FIG. 9 clockwise by 45°. Therefore, in the airbag device having this airbag, similar to the airbag device including the airbag of Fig. 9, and irrespective of the turning angle of the steering wheel 36, it is possible to effectively absorb the impact inflicted on the head portion of the occupant always.

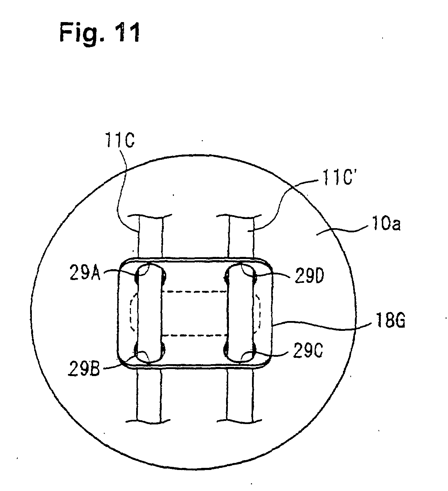

Further, in the embodiment of FIG. 8, although the strap inserting members 18D and 18D' are provided separately in the straps 11C and 11C', in place of the strap inserting members 18D and 18D', as shown in Fig. 11, a strap inserting member 18G having a substantially rectangular shape horizontally long and constructed in a body may be employed. The strap inserting member 18G has openings 29A, 29B, 29C and 29D in the vicinity of the respective vertexes.

The openings 29A, 29B, 29C and 29D are arranged in the upper-left portion, the lower-left portion, the lower-right portion and the upper-right portion of the front panel 10a, respectively. The strap 11C is drawn through the openings 29A and 29B, and the strap 11C' is drawn through the openings 29D and 29C.

A central portion of the strap inserting member 18G is coupled to the inner surface of the front panel 10a by sewing and the like.

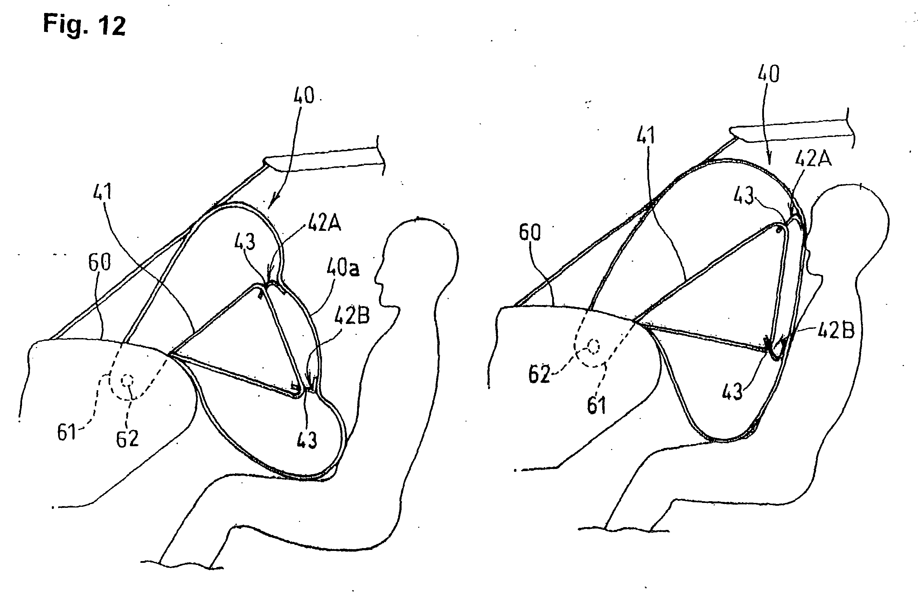

In the aforementioned embodiments, the present invention has been applied to the airbag device for a driver seat of a vehicle. However, the present invention may be applied to various airbag device such as an airbag device for a passenger seat and the like. Next, FIG. 12 is an explanatory view illustrating an example that the present invention is applied to the airbag device for a passenger seat. Further, FIG. 12(a) illustrates a state of the airbag device when the expansion of the airbag is completed and FIG. 12(b) illustrates a state of the airbag device when the occupant is received by the airbag.

The airbag device of FIG. 12 includes an airbag 40 for a passenger seat having a pyramid shape and capable of being expanded toward the front side of the passenger seat from an upper portion of an instrument panel 60. In the airbag 40, a strap 41 connecting an occupant-facing surface 40a on the front end side of the airbag 40 to the rear end side of the airbag 40 is provided.

Strap inserting members 42A and 42B are provided in the upper portion and the lower portion of the inner surface of the occupant-facing surface 40a, respectively. The strap inserting members 42A and 42B are constructed similar to those of the strap inserting members 18A' and 18B' of FIG. 5, respectively, have an opening 43 on the front end sides thereof, respectively and the base side thereof is coupled to the inner surface of the occupant-facing surface 40a by sewing and like.

Both end sides of the strap 41 are coupled to the rear end side of the airbag 40 and the intermediate portion thereof is drawn through the openings 43 of the respective strap inserting members 42A, 42B. The intermediate portion of the strap 41 is movable in the longitudinal direction of the strap in the openings 43.

The airbag 40 is accommodated in its folded state by a case 61 of which the upper surface is open. In the case 61, an inflator 62 is provided for expanding the airbag 40. A cover (not shown) is mounted on the upper open portion of the case. The case 61 is provided in an upper portion of the instrument panel 60 such that the upper surface of the cover is coplanar with the upper surface of the instrument panel 60.

In the airbag device for a passenger seat constructed like the above, the airbag 40 presses and opens the cover by means of gas from the inflator 62 in case of an emergency such as a vehicle collision to be expanded inside the vehicle, and as shown in FIG. 12(a) the airbag is unfolded toward the front side of the passenger seat from the upper portion of the instrument panel 60.

At that time, since the upper portion and the lower portion of the occupant-facing surface 40a are connected to the rear end side of the airbag 40 by means of the strap 41, the forward expansion of the occupant-facing surface 40a is restricted to minimize the inner volume of the airbag 40. For this reason, even when the inflator 62 is low-powered, the airbag 40 completes the unfolding rapidly.

When the occupant comes in contact with the unfolded airbag 40, the lower portion of body such as abdomen first comes in contact with the lower portion of the occupant-facing surface 40a. Then, the lower portion of the occupant-facing surface 40a receives the body of occupant and retreats toward the rear end side of the airbag 40 while absorbing the kinetic energy of the occupant.

At that time, the lower half side of the strap which has restricted the forward expansion of the lower portion of the occupant-facing surface 40a becomes loose as the lower portion of the occupant-facing surface 40a retreats. Then, the lower half of the strap 41 is shifted by the loose portion toward the upper half side through the strap inserting members 42B and 42A by means of tension from the upper half of the strap 41 which has restricted the forward expansion of the upper portion of the occupant-facing surface 40a, thereby increasing the length of the upper half of the strap 41. Consequently, the restriction on the upper portion of the occupant-facing surface 40a by the upper half of the strap 41 is relieved, and thus the upper portion of the occupant-facing surface 40a is more expanded forwardly, as shown in Fig. 12(b).

As a result, the head portion of the occupant coming in contact with the upper portion of the airbag 40 is received by the more expanded upper portion of the airbag 40, so that it is possible to more effectively absorb the impact inflicted on the head portion of the occupant.

### [Advantages]

As described above, according to the present invention, an airbag device is provided in which the forwardly-protruded length of an expanded airbag is limited by a strap, and in which when a lower portion of the expanded airbag receives an abdominal vicinity of an occupant, an upper portion of the airbag is more expanded toward the occupant side to receive the head portion of the occupant.

## Claims

1. An airbag device comprising:
an airbag (10, 40) having a front surface (10a, 40a) facing an occupant and a rear surface (10b) opposite to the front surface (10a, 40a); and
an inflator (31, 62) for expanding said airbag (10, 40), **characterized in that**
strap inserting members (18, 42) are provided in an upper portion and a lower portion of the front surface (10a, 40a) of said airbag (10, 40), respectively, and
wherein a strap (11) disposed within said airbag (10, 40) is provided such that both ends thereof are coupled to the rear surface side of said airbag (10, 40) and an intermediate portion thereof passes through each of said strap inserting members (18, 42).

2. The airbag device according to claim 1, wherein strap inserting members (18E) are provided in a left portion and a right portion of the front surface (10a) of said airbag (10), respectively, and
wherein a strap (110') disposed within said airbag (10) is provided such that both ends thereof are coupled to the rear surface side of said airbag (10) and an intermediate portion thereof passes through each of the left strap inserting member (18E) and the right strap inserting member (18E).

## Patentansprüche

1. Airbagvorrichtung umfassend:
einen Airbag (10, 40), welcher eine einem Insassen gegenüberliegende Vorderfläche (10a, 40a) und eine Rückfläche (10b) gegenüber der Vorderfläche (10a, 40a) aufweist; und
einen Inflator (31, 62) zur Aufweitung des Airbags (10, 40),
**dadurch gekennzeichnet, dass**
Gurteinführteile (18, 42) in einem oberen Abschnitt bzw. in einem unteren Abschnitt der Vorderfläche (10a, 40a) des Airbags (10, 40) vorhanden sind, und
wobei ein im Airbag (10, 40) angeordneter Gurt (11) so vorgesehen ist, dass beide Enden desselben an die Rückflächenseite des Airbags (10, 40) gekoppelt sind, und dass ein dazwischen liegender Abschnitt desselben durch jedes der Gurteinführteile (18, 42) verläuft.

2. Airbagvorrichtung nach Anspruch 1, wobei Gurteinführteile (18E) in einem linken Abschnitt bzw. in einem rechten Abschnitt der Vorderfläche (10a) des Airbags (10) vorhanden sind, und
wobei ein im Airbag (10) angeordneter Gurt (110') so vorgesehen ist, dass beide Enden desselben an die Rückflächenseite des Airbags (10) gekoppelt sind, und dass ein dazwischen liegender Abschnitt desselben sowohl durch das linke Gurteinführteil (18E) als auch durch das rechte Gurteinführteil (18E) verläuft.

## Revendications

1. Un dispositif de coussin gonflable comprenant :
un coussin gonflable (10, 40) comportant une surface antérieure (10a, 40a) faisant face à un occupant et une surface postérieure (10b) opposée à la surface antérieure (10a, 40a) ; et
un gonfleur (31, 62) pour gonfler ledit coussin gonflable (10, 40), **caractérisé en ce que**
des éléments d'insertion de sangle (18, 42) sont prévus dans une partie supérieure et une partie inférieure de la surface antérieure (10a, 40a) dudit coussin gonflable (10, 40), respectivement, et
dans lequel une sangle (11) disposée à l'intérieur dudit coussin gonflable (10, 40) est prévue de sorte que les deux extrémités de celle-ci soient couplées au côté formant surface postérieure dudit coussin gonflable (10, 40) et qu'une partie intermédiaire de celle-ci passe à travers chacun desdits éléments d'insertion de sangle (18, 42).

2. Le dispositif de coussin gonflable selon la revendication 1, dans lequel des éléments d'insertion de sangle (18E) sont prévus dans une partie gauche et une partie droite de la surface antérieure (10a) dudit coussin gonflable (10), respectivement, et
dans lequel une sangle (110') disposée à l'intérieur dudit coussin gonflable (10) est prévue de sorte que les deux extrémités de celle-ci soient couplées au côté formant surface postérieure dudit coussin gonflable (10) et qu'une partie intermédiaire de celle-ci passe à travers chacun parmi l'élément d'insertion de sangle de gauche (18E) et l'élément d'insertion de sangle de droite (18E).
